# EUROPEAN PATENT APPLICATION

(11) **EP 1 209 070 A2**
(43) Date of publication of application: **29.05.2002**
(21) Application number: 01309817.3
(22) Date of filing: 22.11.2001
(51) Int. Cl.: B62D 43/00

(54) **Wheel cover**

(30) Priority: 23.11.2000 GB 0028551
(71) Applicant: O.E.(Europe) plc, Blidworth, Nottinghamshire NG21 ORT (GB)
(72) Inventor: Leadbeater, Robert James, Sherwood, Nottinghamshire NG5 1HB (GB)
(74) Representative: Jones, Stephen Anthony

(57) **Abstract**

A wheel cover (1) in the form of an enclosure for the spare wheel of a motor vehicle. The wheel cover (1) comprises first and second enclosure members (2,3) which together define an enclosure for the wheel. The first enclosure member (2) is mounted on the vehicle and the second enclosure member (3) is releasably fastenable to the first (2). Connection of the second enclosure member (3) to the first enclosure member (2) is by means of a bayonet-type fitting.

## Description

This invention relates to a wheel cover, that is to say to an enclosure used to accommodate the spare wheel on a motor vehicle, particularly a spare wheel that is carried on the rear door of a motor vehicle.

All motor vehicles used on public highways are obliged to carry a spare wheel, which is used to replace one of the road wheels in the event of a tyre puncture, blow-out etc. In saloon cars and the like, the spare wheel is commonly carried either in the floor of the bootspace, being accessed by opening the boot, or underneath the vehicle, being held in place by a suitable cradle or clamping mechanism. In either case, the spare wheel is essentially hidden from view.

In other types of vehicle, however, notably vehicles of the "off-road" or "4x4" type, or vehicles which mimic the style of such vehicles, the spare wheel is commonly fitted to the rear door of the vehicle and is therefore exposed to view. The same may be true of small cars such as sports cars in which the spare wheel is mounted atop the boot lid.

In order to improve the aesthetic appearance of the vehicle, it is normal practice for the spare wheel to be enclosed within a wheel cover. Such a wheel cover normally comprises two plastics halves, one of which is fixed to the vehicle and the other of which is mounted upon the first to completely enclose the spare wheel. In order to provide some security and prevent theft of the spare wheel, some form of locking mechanism is normally fitted which holds the two halves of the wheel cover together.

Known wheel covers of the type described suffer from a number of disadvantages, notably that fitting of the removable half to the fixed half is sometimes difficult to carry out, sometimes requiring considerable strength and/or dexterity. In attempts to overcome these difficulties, mechanisms have been devised which are complex and hence relatively expensive to manufacture and/or prone to malfunction or misuse.

There has now been devised a wheel cover for the spare wheel of a vehicle which overcomes or substantially mitigates some or all of the above-mentioned or other disadvantages of the prior art.

According to the invention, there is provided a wheel cover in the form of an enclosure for the spare wheel of a motor vehicle, said wheel cover comprising first and second enclosure members which together define an enclosure for the wheel, the first enclosure member being mounted on the vehicle and the second enclosure member being releasably fastenable to the first, wherein connection of the second enclosure member to the first enclosure member is by means of a bayonet-type fitting.

The wheel cover according to the invention is advantageous primarily in that it is of relatively simple construction, yet enables the wheel cover to be opened and closed easily and reliably.

By a "bayonet-type fitting" is meant a fitting in which a fastener projection on one of the first and second enclosure members is received within a correspondingly shaped recess or slot in the other, the slot or recess having a terminal portion arranged at an angle to the rest of the slot such that by relative rotation of the first and second enclosure members they can be caused to fasten together.

The fastener projection is most preferably a stud or the like provided on one of the first and second enclosure members, the other being provided with the corresponding slot or recess. The projection and the slot or recess together constitute a securing point, there preferably being several such securing points spaced, most preferably equiangularly, around the periphery of the wheel cover.

The fastener projection is most preferably provided on the first, fixed enclosure member, and the slot or recess on the second, removable enclosure member. Most preferably, there are four securing points, spaced apart at 90° intervals around the periphery of the wheel cover.

In order to facilitate engagement of the second enclosure member with the first, the peripheral regions of the two enclosure members preferably overlap. In order to achieve this, the rim of one of the enclosure members is preferably slightly enlarged and that of the other is slightly reduced in size.

Preferably, means for locking the second enclosure member to the first enclosure member are provided. Such means may take the form of a simple key-operated lock fitted, most preferably, to the first, fixed enclosure member, and provided with a locking member which engages, in use, a cooperating component of the second enclosure member so as to prevent removal of that enclosure member from the first.

The first and second enclosure members are preferably formed in plastics materials, eg a material such as acrylonitrile-butadiene-styrene (ABS) and may be coloured to match the vehicle with which the wheel cover is to be used. Such colouring may be achieved by means of painting or by the incorporation of pigments into the material from which the enclosure members are formed.

The invention will now be described in greater detail, by way of example only, with reference to the accompanying drawings, in which
Figure 1 is a perspective view of a wheel cover according to the invention, comprising two halves that are shown in a separated condition;
Figure 2 is an enlarged detail view of a locking stud fitted to one half of the wheel cover and forming one half of one of four locking points spaced around the wheel cover;
Figure 3 is an enlarged detail view of a locking slot formed in the other half of the wheel cover which constitutes the second half of the locking point;
Figure 4 shows stages in the engagement / disengagement of a locking point associated with a lock mechanism; and
Figure 5 shows stages in the engagement / disengagement of one of the other three locking points.

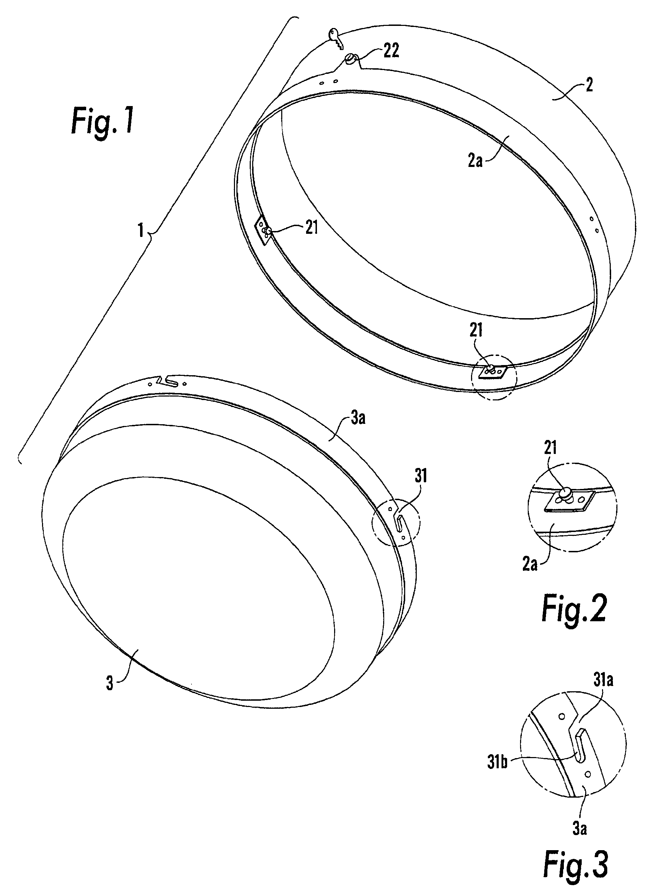

Referring first to Figure1, a wheel cover for a vehicle of the "4x4" type is generally designated 1 and comprises two principal components, viz a fixed half 2 and a removable half 3. Both the fixed half 2 and removable half 3 are moulded in plastics material (ABS) with a thickness of approximately 4.5mm. The two halves 2,3 together define a drum-shaped enclosure of sufficient dimension to receive the spare wheel (not shown).

The fixed half 2 is of essentially hemicylindrical shape, with a substantially planar end face which, in use, abuts the surface of the motor vehicle (eg the rear door) to which the wheel cover 1 is fitted. That end face may have an opening (not shown in Figure 1) through which a mounting bracket or the like for the spare wheel, which is itself mounted on the rear of the motor vehicle, may project. Such a mounting bracket may also serve to captivate the fixed half 2 on the motor vehicle. The peripheral region 2a of the open mouth of the fixed half 2 is of slightly enlarged diameter.

The removable half 3 has a slightly domed end face, and the peripheral region 3a of its open mouth is of slightly reduced diameter, such that the rim of the removable half 3 fits closely within the open mouth of the fixed half 2.

The peripheral region 2a of the mouth of the fixed half 2 is fitted with four locking studs 21, of which two are visible in Figure 1. The studs 21 are mounted on plates which are fixed to the internal surface of the fixed half 2 by rivets. The studs 21 are positioned around the internal periphery of the fixed half 2 at angular separations of 90°.

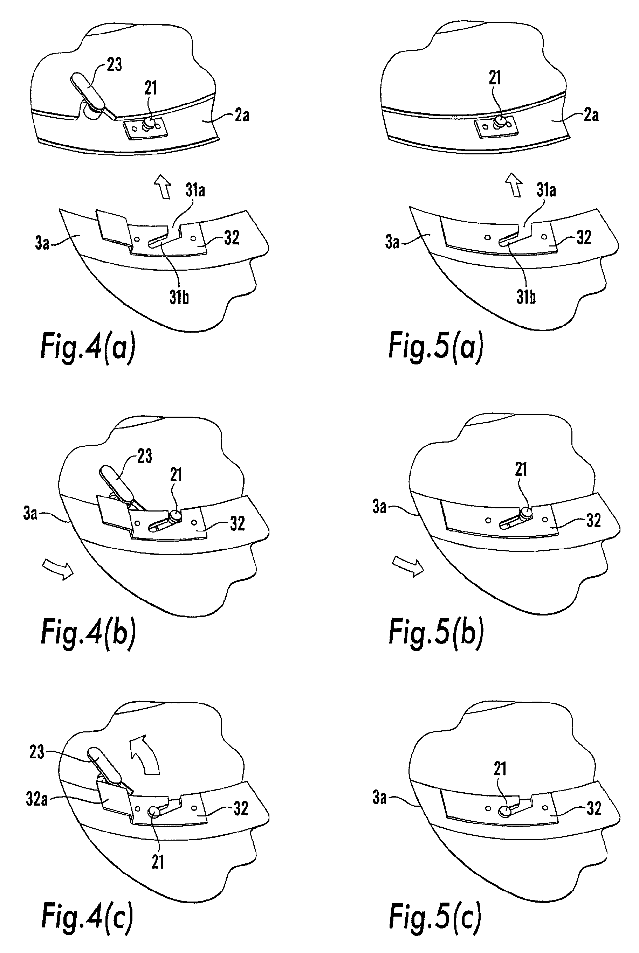

A key-operated lock 22 is mounted adjacent one of the locking studs 21 (the topmost stud 21 as viewed in Figure 1). The barrel of the lock 22 is connected to a locking bar 23 (visible in Figure 4).

The rim of the removable half 3 is formed with four slots 31, which are also disposed at 90° angular separations. The slots 31 have a first limb 31a disposed parallel to the axis of engagement of the fixed and removable halves 2,3 and a second limb 31b disposed substantially at right angles thereto. The slots 31 are reinforced by steel plates 32 (see Figures 4 and 5) which are riveted to the internal surface of the rim of the removable half 3 and which are also formed with slots corresponding to the slots 31 in the rim of the removable half 3.

The end portion 32a of the plate 32 which is aligned in use with the lock 22 is cranked so as to be spaced away from the internal surface of the removable half 3. The cranked end portion 32a of this plate 32 serves as a keeper for the locking bar 23.

In use, the removable half 3 is mounted upon the fixed half 2 by offering the removable half 3 up to the fixed half 2 which is mounted on the vehicle. The slots 31 are aligned with the studs 21 and the removable half 2 pressed into engagement with the fixed half 3 (along the arrows in Figures 4(a) and 5(a)). The removable half 2 is then rotated counter-clockwise through a few degrees (see arrows in Figures 4(b) and 5(b)) relative to the fixed half 3 so that the studs 21 travel along the second limbs 31b of the slots 31.

In this condition, the removable half 3 is held in place on the fixed half 2. The two halves 2,3 can be locked together by operation of the lock 22, by which the locking bar 23 is rotated (as indicated by the arrow in Figure 4(c)) into engagement with the keeper constituted by the cranked end portion 32a of the plate 32 aligned with the lock 22.

To remove the removable half 2 from the fixed half 3, so as to permit access to the spare wheel contained within the wheel cover 1, the process is reversed. First, the lock 22 is actuated so as to release the locking bar 23 from the cranked end portion 32a of the plate 32. The removable half 2 is then rotated clockwise by a few degrees and withdrawn from the fixed half 3.

## Claims

1. A wheel cover in the form of an enclosure for the spare wheel of a motor vehicle, said wheel cover comprising first and second enclosure members which together define an enclosure for the wheel, the first enclosure member being mounted on the vehicle and the second enclosure member being releasably fastenable to the first, wherein connection of the second enclosure member to the first enclosure member is by means of a bayonet-type fitting.

2. A wheel cover as claimed in Claim 1, wherein the bayonet-type fitting comprises a fastener projection on one of the first and second enclosure members and a correspondingly shaped recess or slot in the other.

3. A wheel cover as claimed in Claim 2, wherein the fastener projection is a stud.

4. A wheel cover as claimed in any one of Claims 2 and 3, wherein the slot or recess has a terminal portion arranged at an angle to the rest of the slot such that by relative rotation of the first and second enclosure members they can be caused to fasten together.

5. A wheel cover as claimed in any preceding claim, wherein the fastener projection is provided on the first, fixed enclosure member, and the slot or recess on the second, removable enclosure member.

6. A wheel cover as claimed in any preceding claim, wherein the projection and the slot or recess together constitute a securing point and there are several such securing points.

7. A wheel cover as claimed in Claim 6, wherein the securing points are spaced equiangularly around the periphery of the wheel cover.

8. A wheel cover as claimed in Claim 7, wherein there are four securing points, spaced apart at 90° intervals.

9. A wheel cover as claimed in any preceding claim, wherein the peripheral regions of the two enclosure members overlap.

10. A wheel cover as claimed in Claim 9, wherein the rim of one of the enclosure members is slightly enlarged and the rim of the other enclosure member is slightly reduced in size.

11. A wheel cover as claimed in any preceding claim, wherein the second enclosure member is locked to the first enclosure member by locking means.

12. A wheel cover as claimed in Claim 11, wherein the locking means take the form of a simple key-operated lock.

13. A wheel cover as claimed in Claim 12, wherein the key-operated lock is fitted to the first, fixed enclosure member, and is provided with a locking member which engages, in use, a cooperating component of the second enclosure member so as to prevent removal of that enclosure member from the first.

14. A wheel cover as claimed in any preceding claim, wherein the first and second enclosure members are formed in plastics materials.

15. A wheel cover as claimed in Claim 14, wherein the first and second enclosure members are formed in acrylonitrile-butadiene-styrene.

16. A motor vehicle fitted with a wheel cover as claimed in any preceding claim.
